# EUROPÄISCHE PATENTSCHRIFT

(11) **EP 2 428 378 B1**
(45) Veröffentlichungstag und Bekanntmachung des Hinweises auf die Patenterteilung: **17.02.2016**
(21) Anmeldenummer: 11007218.8
(22) Anmeldetag: 06.09.2011
(51) Int. Cl.: B60J 7/12

(54) **Lenker für ein Faltdach**
Rod for a collapsible roof
Bielle pour toit escamotable

(30) Priorität: 08.09.2010 DE 102010044701
(43) Veröffentlichungstag der Anmeldung: 14.03.2012
(73) Patentinhaber: Magna Car Top Systems GmbH, 74321 Bietigheim-Bissingen (DE)
(72) Erfinder: Röder, Holger, 73054 Eislingen (DE); Wilke, Gunnar, 49434 Neuenkirchen-Vörden (DE)
(74) Vertreter: Völger, Silke Beatrix

(56) Entgegenhaltungen:
- DE-B3-102004 010 930
- DE-C1- 19 706 417
- JP-A- H 037 619
- US-A- 5 385 381

## Beschreibung

Die vorliegende Erfindung betrifft einen Lenker für ein Faltdach eines Fahrzeugs, insbesondere eines Kraftfahrzeugs, mit den Merkmalen des Oberbegriffs des Anspruchs 1. Diese Merkmale sind aus den US 5 385 381 A bekannt. Die Erfindung betrifft außerdem ein mit einem derartigen Lenker für ein Faltdach ausgestattetes Fahrzeug.

Es ist bekannt, dass bewegbare Dächer, insbesondere Faltdächer über gelenkig verbundene Lenker relativ zueinander bzw. zur Fahrzeugkarosserie geschwenkt oder geklappt werden können. Hierbei sind die Lenker einerseits gelenkig an Teilen des bewegbaren Daches angebracht und mit ihren anderen Enden an einem oder mehreren Hauptlagern am Fahrzeugaufbau schwenkbar gelagert. Das bewegbare Dach kann aus mehreren Teilbereichen bestehen, welche untereinander mittels Lenker, Scharnieren oder sonstigen bewegbaren Verhindungselementen verbunden sind.

Beim Bewegen des Dachs werden diese einzelnen Dachteile relativ zueinander verstellt, wobei bei vollständig geöffnetem Dach die einzelnen Dachteile möglichst platzsparend aufeinander oder ineinander greifend in einem heckseitigen Aufnahmebereich des Fahrzeugs abgelegt werden. Bei sich schließendem Dach, werden die einzelnen Dachteile über ihre verbindenden Lenker in eine geschlossene Dachposition bewegt, wobei das zu bewegende Dach aus einzelnen starren Elementen bestehen kann oder von einen, die Dachbereiche überspannenden Verdeckstoff bedeckt werden. Der Antrieb derartiger Dächer erfolgt beispielsweise elektrisch oder hydraulisch, wobei Verbindungselemente in Form von Lenkern oder Streben die einzelnen bewegbaren Dachteile miteinander verbinden/koppeln, so dass diese mittels dieser verbindenden Bauteile entsprechend bewegt und/oder verstellt werden können.

Die Auswahl, Gestaltung und Dimensionierung dieser verbindenden Elemente beziehungsweise der Lenker zwischen den einzelnen Dachteilen und/oder dem Fahrzeugaufbau bestimmen die Bewegurlgsform sowie die Bewegungsgeschwindigkeit der einzelnen Dachteile, wobei bei einem Faltdach die überspannende Stoffbahn bei sich öffnendem oder schließendem Dach einen vorbestimmten Bewegungsablauf z. B. zur Faltenbildung durchläuft.

Aus der DE 10913 356 C2 ist ein kinematisches Verdeck für PKW, insbesondere PKW-Cabriolets bekannt, bei dem sich ein Faltdach zwischen der Windschutzscheibe und dem Heckbereich des Fahrzeuges erstreckt. Das Faltdach weist einen vorderen, mittleren und hinteren Bereich auf und wird bei geschlossenem Faltdach von einem Verdeckstoff überspannt. Das vordere und mittlere Dachteil sind mittels Lenker in Anordnung eines Parallelogramms verbunden. Der mittlere Dachbereich ist durch die C-Säule bildende Lenker mit dem Fahrzeugaufbau verbunden, wobei einer dieser Lenker Ober den mittleren Dachbereich hinausragend verlängert ist und mit dieser Verlängerung in eine schlitzförmige Öffnung des hinteren Lenkers, des vorderen und des mittleren Dachteils verbindende Lenkerparallelogramms, eingreift. Über die in die schlitzförmige Öffnung eingreifende Verlängerung des gebogenen Lenkers wird das Lenkerparallelogramm zwischen vorderem und mittlerem Dachteil in seiner Bewegung angetrieben und aus einer vorderen, zur Windschutzscheibe angrenzenden Position, in eine dem mittleren Dachteil überlappende Position bewegt. Ober die schlitzförmige Öffnung erfolgt der Antrieb des vorderen Dachteils, wobei die schlitzförmige Öffnung auch zur Längenkompensation zwischen der Verlängerung des gekrümmten Lenkers und der kreuzenden Bewegung des hinteren Lenkers des Lenkerparallelogramms dient.

Ein weiteres Faltverdeck für ein Fahrzeug ist in der DE 100 53 236 A1 beschrieben, wobei auch hier, bei geschlossenem Faltverdeck der Fahrgastraum von einem Verdeckstoff überspannt wird. Der Verdeckstoff ist hierbei an einer beweglichen Frontabdeckung in Form einer Dachkappe befestigt und im hinteren Bereich des Verdeckstoffes am Fahrzeugaufbau angebracht. Im vorderen Bereich des Faltverdecks ist ein Montageteil mit der Dachkappe verbunden, wobei von dem Montageteil ausgehend zwei im Wesentlichen parallel zueinander verlaufenden Lenker einerseits schwenkbar an dem Montageteil und andererseits schwenkbar am Fahrzeugaufbau angebracht sind.

In etwa mittiger Position des hinteren Lenkers ist ein im Wesentlichen U-förmiger Spriegel mit seinen freien Enden am hinteren Hauptlenker gelagert, wobei die freien Enden über einen Wirikelhebel in eine bogenförmige, schlitzförmige Öffnung eines Steuerlenkers eingreifen. Das obere Ende des Steuerlenkers ist am Montageteil zwischen oberen Anlenkpunkten der beiden Hauptlenker schwenkbar angebracht, Das nach unten weisende Ende des Steuerlenkers ist selber wieder in einer bogenförmigen schlitzförmigen Öffnung des hinteren Hauptlenkers aufgenommen.

Bei sich bewegendem Dach gleitet das untere Ende des Steuerlenkers über einen Bolzen verbunden in der schlitzförmigen Öffnung des hinteres Hauptlenkers, so dass in der oberen schlitzförmigen Öffnung des Steuerlenkers das winkelförmige Ende des Spriegels entsprechend der Kurvenform der Gesamtbewegung des Steuerlenkers verschwenkt wird. Eine derartige Verschwenkung des Spriegels ist von Vorteil, da dieser aus der den Verdeckstoff spannenden Position in eine stofflose Position bewegt wird.
Auf diese Art lässt sich der Verdeckstoff bei sich öffnendem Dach in Falten zusammenlegen und in einem hierfür vorgesehenen heckseitigen Aufnahmeraum als zusammengeklapptes Fahrzeugverdeck ablegen. Der Spriegel wird also über einen zwischen dem Montageteil und dem hinteren Lenker befindlichen Steuerlenker auf eine vorbestimmte Kurvenbahn gezwungen, wobei gleichzeitig eine Schwenk- und eine Linearbewegung erfolgen. Eine zumindest einseitige Verbindung des Steuerlenkers zum Hauptlager der gesamten Dachkinematik liegt nicht vor.

Die US 3,030,140 zeigt einen Lenkermechanismus zum Bewegen eines sich in Fahrzeuglängsrichtung erstreckenden Fahrzeugdachs. Das Fahrzeugdach besteht, wie bei den zuvor beschriebenen Schutzrechten, aus einem Verdeckstoff, wobei der Verdeckstoff an seinem, entgegen der Fahrtrichtung hinteren Ende, über eine Aufnahmevorribhtung mit dem Fahrzeugaufbau verbunden ist. Ein Hauptlenker ist in einem Hauptlager gelagert, wobei der Hauptlenker mehrere auskragende Hebelbereiche aufweist, an denen beispielsweise Stütz- oder Steuerlenker oder Antriebselemente befestigt sind. Der Hauptlenker, sowie ein im Wesentlichen parallel verlaufender Koppellenker sind im Bereich der C-Säule des Faltverdeckes angeordnet, wobei ein flach nach hinten weisender Eckspriegel oberhalb der Heckscheibe an seinem dem Fahrgastinnenraum zugewandten Ende bogenförmige Verlängerungen aufweist. Diese bogenförmigen Verlängerung gen sind mit einer schlitzförmigen Öffnung versehen, wobei diese schlitzförmige Öffnung in einen hervorstehenden Hebel des Hauptlenkers eingreift. Hauptlenker und schlitzförmige Öffnung sind beispielsweise über einen Bolzen miteinander verbunden, so dass der Bolzen in der schlitzförmigen Öffnung entsprechend der Dachbewegung verschoben werden kann.

Die schlitzförmige Öffnung in der Verlängerung des Spriegels dient zur Steuerung der Verdeckspannung, sowie dazu, dass der Spriegel selber bei geschlossenem Verdeck eine zusätzliche Verdeckstoffspannung erzeugt. Der Spriegel wird über einen zusätzlichen Koppellenker an einem hervorstehenden Hebelbereich des Hauptlenkers abgestützt, so dass der verlängerte bogenförmige Endbereich des Spriegels und der Koppellenker ein Getriebe bilden. Weiter weist der dem Fahrzeuginnenraum zugewandte Endbereich des Spriegels eine in Fahrtrichtung weisende geschweifte Verlängerung auf, die mit ihrem Ende in einem Dreipunktehebel befestigt ist. Dieser Dreipunktehebel wird über eine separate, im Wesentlichen parallel zum Hauptlenker verlaufende Koppelstange mit dem Hauptlenker verbunden.

Die vorliegende Erfindung beschäftigt sich mit dem Problem, einen Spriegel für ein Faltdach so zu verstellen, dass dieser in Abhängigkeit zur Bewegung des Faltdachs eine vorbestimmte Bewegungsform ausführt. Diese Spriegelverstellung soll mit wenigen Teilen einfach und kostengünstig durchführbar sein.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, dass Faltdächer von einem Verdeckstoff überspannt werden und zur Erzeugung der Spannung im Randbereich des Verdeckstoffs Dachseitenträger, sowie den Fahrgastraum übergreifende Spriegel verwendet werden. Bei geschlossenem Faltdach erstreckt sich der Verdeckstoff in der Regel im Bereich der Oberkante der Windschutzscheibe bis in den Heckbereich des Fahrzeuges, wobei der Verdeckstoff nahe der Windschutzscheibe an einer Dachkappe befestigt sein kann und im hinteren Verdeckstoffbereich mittels einer Vorrichtung, meist einem Spannbügel in einem Aufnahmebereich der Fahrzeugkarosserie aufgenommen und befestigt wird. Zur Stabilisierung des Verdeckstoffs sowie zur Erzeugung einer Verdeckstoffspannung übergreifen den Fahrgastinnenraum von der linken bis zur rechten Fahrzeugseite einer oder mehrere Spriegel. Die Spriegel können über elastische Verbindungselemente mit dem Verdeckstoff verbunden sein, wobei die Spriegel auch in Taschen des Verdeckstoffs eingeschoben werden können. Diese Verbindung zwischen Spriegel und Verdeckstoff ist notwendig, da bei sich öffnendem oder schließendem Faltdach der Verdeckstoff In vorbestimmte Positionen gefaltet und zusammengelegt werden können muss.

Hierzu kann es notwendig sein, dass die Spriegel aus ihrer den Verdeckstoff spannenden Position (bei geschlossenem Verdeck) herausgeschwenkt werden müssen, damit die Verdeckstoffspannung verringert werden kann und damit überhaupt eine Bewegung des Verdeckstoffes in Richtung vorbestimmte Faltenlage erfolgt. Ohne das Herausschwenken eines Spriegels, würde die Spannung bei sich bewegendem Dach so stark ansteigen können, dass eine Zerstörung des Verdeckstoffes die Folge wäre. Auch wird wie schon angedeutet, über den Spriegel eine gezielte Faltenlage beziehungsweise Bewegung des Verdeckstoffes auf diesen aufgebracht. Hierzu können die Enden der Spriegel mit einem Halter ausgestattet sein, wobei dieser Halter mit Dachseitenträgerelementen oder sonstigen Lenkern der Dachkinematik verbunden sind:

Eine weitere Möglichkeit zur Steuerung der Spriegelbewegung besteht darin, dass die Enden der Spriegel, beziehungsweise endseitigen Halter der Spriegel, über Koppellenker mit Haupt- oder Antriebslenkern verbunden sein können, wobei trotz dieser Verbindung ein freies Schwenken des/der Spriegel möglich ist. Um hier eine gezielte Bewegungsform und/oder Bewegungsgeschwindigkeit des Spriegels zu erzeugen, können die mit den Spriegelenden verbundenen Koppellenker über zusätzliche Lenker in Form von Steuerlenkern verbunden werden. Hierbei ist es vorteilhaft, wenn die Koppellenker über einen von diesen abstehenden Bolzen oder Gleitkörper in eine schlitzförmige Öffnung des Steuerlenkers eingreifen und der Steuerlenker durch seine beispielsweise fahrzeugaufbauseitige Lagerung dem Koppelleriker eine bestimmte Bewegungsform aufzwingt. Selbstverständlich ist es möglich, die schlitzförmigen Öffnung der Steuerlenker auch geschweift oder kurvenförmig verlaufen kann. Somit können überlagerte Bewegungen und Geschwindigkeitsänderungen während des gesamten Bewegungsvorgangs des Fahrzeugdachs realisiert werden.

Die Endbereiche der schlitzförmigen Öffnung der Steuerlenker dienen häufig als Endanschläge für den Bolzen beziehungsweise dem Gleitstein oder Gleitkörper der über einen Halter mit dem Koppellenker verbunden ist. Zur Reduzierung von Stößen und Vermeidung von Geräuschbildungen bei Erreichen der Endlagen zwischen Bolzen und schlitzförmiger Öffnung des Steuerlenkers können in der schlitzförmigen Öffnung des Steuerlenkers Anschlagdämpfer in Form von Gummikappen, Gummipuffer oder sonstigen elastischen Elementen eingebracht werden Selbstverständlich ist es möglich, dass zwischen einem Ende der schlitzförmigen Öffnung und dem Bolzen/Gleitkörper ein Federelement eingebracht sein kann. Mittels einer solchen Feder ist es möglich, dass bei beginnender Bewegung des Faltdachs quasi eine Startbewegung des Koppellenkers und des Spriegels eingeleitet wird. Auch ist es möglich, dass parallel zur schlitzförmigen Öffnung beispielsweise ein Dämpferelement in Form eines Teleskopdämpfers montiert ist.

Da die schlitzförmige Öffnung der Steuerlenker in ihren Endbereichen als Anschlag für die Bewegung der Koppellenker dienen kann, ist es vorteilhaft, wenn die Anschlagdämpfer oder zu diesen parallel angeordnet Endschalter integriert sind. Es ist auch möglich, dass über den Bolzen/Gleitkörper in der schlitzförmigen Öffnung des Steuerlenkers die Stoffspannung mittels geeigneter Sensoren aufgenommen wird, so dass bei zu großen Verdeckstoffspannungen der Bewegungsvorgang des Faltdachs abgebrochen werden kann.

Selbstverständlich kann der Halter zur Aufnahme des Solzen/Gleitkörpers des Koppellenkers ebenfalls eine schlitzförmige Öffnung aufweisen oder als schwenkbarer beweglicher Halter in die schlitzförmige Öffnung des Steuerlenkers eingreifen. Vorteilhaft gestaltet es sich auch, wenn die Enden der Koppellenker und die Spriegelenden gemeinsam in einer Lagerung an der Dachkinematik angeordnet sind, so dass über diese Verbindung die schlitzförmige Öffnung des Steuerlenkers auf weitere Dochbauteile wirkend als Endanschlag dienen kann. Der Steuerlenker mit der schlitzförmigen Öffnung ist ein passiver Lenker, der nur durch die Bewegung des Faltdachs in seiner Funktion zur Steuerung eines Spriegels wirken kann.

Weitere wichtige Merkmale und Vorteile der Erfindung ergeben sich aus den Unteransprüchen, aus der Zeichnung/oder aus der zugehörigen Figurenbeschreibung anhand der Zeichnung.

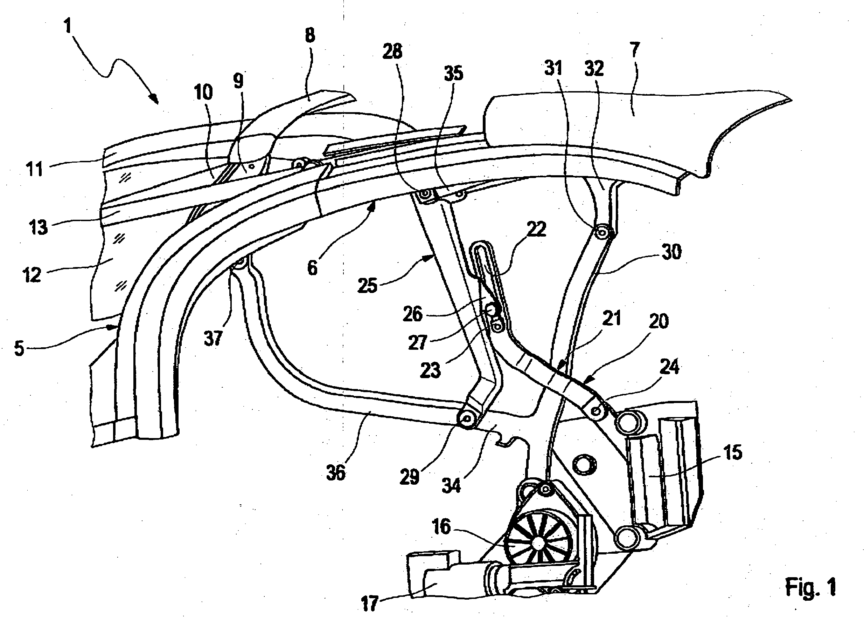

Eine bevorzugte Ausführungsform der Erfindung ist in der Zeichnung Figur 1 dargestellt und wird in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig.1: eine perspektivische Darstellung der Lenkerkinematik mit Steuerlenker eines Faltdachs.

Fig.1 zeigt eine perspektivische Darstellung eines geschlossenen Faltdachs 1 mit Lenkerkinematik, sowie eine über einen Steuerlenker 20 gesteuerten Koppellenker 26 zur gezielten Bewegung eines Eckspriegels 11. Das Fahrzeugdach 1 setzt sich im Wesentlichen aus einer im vorderen Dachbereich angebrachten Dachkappe 7, und entsprechend der Aufteilung und Dachlünge vorhandenen Anzahl von Dachseitenträgern 6 zusammen, wobei der hintere Dachseitenträgerbereich die C-Säule 5 bildet.

Zwischen den beiden C-Säulen 5 verläuft der Verdeckstoff mittels des Eckspriegels 11 so aufgespannt, dass im hinteren Bereich des Faltdachs 1 eine Heckscheibe 12 in den Verdeckstoff integriert sein kann. Diese Heckscheibe 12 besteht aus Glas oder einem transparenten Kunststoff und ist direkt oder über entsprechende Haltevorrichtungen mit dem Verdeckstoff verbunden. Damit bei sich öffnendem Faltdachs 1, die Heckscheibe 12 in vorbestimmte Position bewegt wird, sind die Seitenbereiche der Heckscheibe 12 häufig durch Koppelstreben 13 oder Streben 10 verbunden, so dass auf diese Art und Weise die gezielte Bewegungsform der Heckscheibe 12 erst möglich wird.

Entsprechend der Figur 1 ist zwischen dem Eckspriegel 11 und der vorderen Dachkappe 7 ein weiterer Spriegel 8 positioniert, der endseitig jeweils über einen Halter 9 mit der C-Säule 5 oder einem Dachseitenträger 6 verbunden ist. Zur Steuerung des Spriegels 8 und/oder der Heckscheibe 12 kann wie in Figur 1 dargestellt, die Heckscheibe 12 in ihrem seitlichen Bereich schwenkbar über das Lager 37 in einem hinteren Lenker 36 verbunden sein, wobei das von der Heckscheibe 12 entfernt liegende Ende des hinteren Lenkers 36 in einer Lagerung 29 des Antriebslenkers 30 schwenkbar aufgenommen ist.

Bei sich bewegendem Faltdach 1 erfolgt Ober den Antriebslenker 30 eine Schwenkbewegung auf den hinteren Lenker 36, der diese über das Lager 37 auf die Heckscheibe 12 und/oder der Koppelstrebe 13 oder der Strebe 10 überträgt. Mittels dieser Streben 10, 13 wird der Spriegel 8 bewegt, wobei die Koppelstrebe 13 auch als Antriebselement für die C-Säule 5 dienen kann.

Der Antriebslenker 30 ist mit seinem zur Fahrbahn weisenden Ende schwenkbar an einem Hauptlager 15 befestigt, wobei über einen Antriebsmotor 17 und einem Getriebe 16 und weiteren nicht näher beschriebenen Antriebselementen eine Schenkbewegung auf den Antriebslenker 30 übertragen werden kann. Das zum Faltdach 1 weisende Ende des Antriebslenkers 30 ist schwenkbar in einem Lager 31 eines Hebels 32 eines vorderen Bereiches eines Dachträgers 6 oder einer Dachkappe 7 verbunden.

In der gemeinsamen Lagerung 29 zwischen dem hinteren Lenker 36 und dem herauskragenden Hebel 34 des Antriebslenkers 30 ist ebenfalls ein Koppellenker 25 schwenkbar aufgenommen. Der Koppellenker 25 ist faltdachseltig über ein Lager 28 mit Lenkern 35 verbunden. Die Lenker 35 können Verbindungselemente zwischen den einzelnen Dachträgerelementen 6 darstellen. Ebenfalls ist der Eckspriegel 11 mit seinen Enden in der Lagerung 28 mit dem Koppellenker 25 verbunden. Um dem Koppellenker 25 und somit dem Eckspriegel 11 eine gezielte Bewegungsform bei sich öffnendem oder sich schließendem Faltdach 1 zu ermöglichen, ist der Koppellenker 25 über einen Steuerlenker 20 mit dem Hauptlager 15 verbunden. Der Koppellenker 25 weist hierzu in etwa mittiger Position einen Halter 26 auf, an dessen Ende ein Bolzen 27 oder ein Gleitkörper in eine schlitzförmige Öffnung 22 des Steuerlenkers 20 eingreift.

Der Steuerlenker 20 ist in der erfindungsgemäßen Ausführung mit einer Kröpfung 21 versehen, die notwendig ist, damit bei bewegendem Faltdachs 1 der Steuerlenker 20 am Antriebslenker 30 vorbeigeführt werden kann. Der Steuerlenker 20 ist über die Lagerung 24 mit dem Hauptlager 15 schwenkbar verbunden, wobei die Lagerung 24 sowohl als Schwenklager oder kardanische Lagerung ausgeführt sein kann.

Selbstverständlich ist es möglich, dass der auskragende Hebel 34 des Antriebslenkers 30 zusätzlich als schwenkbarer Lenker ausgeführt ist, wobei dieser der Begrenzung der Beweglichkeit des hinteren Lenkers 36 sowie des Koppellenkers 25 mit entsprechenden Anschlägen versehen sein muss.

Die schlitzförmige Öffnung 22 des Steuerlenkers 20 kann geradlinig oder in gekrümmter Form ausgeführt werden, wobei die Enden der schlitzförmigen Öffnung 22 Anschläge für den Bolzen 27 des Halters 26 darstellen. Über diese Anschläge wird die Beweglichkeit des Eckspriegels 11 gesteuert, wobei zur Vermeidung von Geräuschen oder zu heftigen Endanschlägen innerhalb der schlitzförmigen Öffnung 22 Anschlagdämpfer 23 integriert sein können. Diese Anschlagdämpfer 23 sind vorzugsweise aus einem Elastomer hergestellt, die in die schlitzförmige Öffnung 22 beispielsweise eingeclipst, eingeklebt oder mittels einer Klemmvorrichtung eingebracht und gehalten werden. Der Steuerlenker 20 kann bei sich öffnendem oder schließendem Faltdachs 1 sowohl zwischen dem Verdeckstoff und dem Koppellenker 25, wie auch zwischen dem Fahrgastinnenraum und dem Koppellenker 25 vorbeigeführt werden. Der Koppellenker 25 sowie der Steuerlenker 20 befinden sich im hinteren Stoffbereich der C-Säule 5.

Selbstverständlich ist es möglich, dass der Spriegel 8 ebenfalls über einen Koppellenker und einen Steuerlenker bewegt wird, wobei auch eine Verbindung zwischen dem Koppellenker 25 und des Spriegels 8 denkbar wäre. Entsprechend der Ausgestaltung des Steuerlenkers 20 und seiner Hebelverhältnisse kann dieser sowohl aus einem flachen Metall gebogen, gestanzt oder aus einem Kunststoff gespritzt hergestellt sein. Auch ist es denkbar, dass der Steuerlenker 20 Ober eine geeignete Verbindung direkt über die Antriebseinheit angetrieben werden kann, so dass eine aktive Verstellung des Eckspriegels 11 möglich ist.

### Bezugszeichenliste

- 1: Faltdach

- 5: C-Säule
- 6: Dachseitenträger
- 7: Dachkappe
- 8: Spriegel
- 9: Halter
- 10: Strebe
- 11: Eckspriegel
- 12: Heckscheibe
- 13: Koppelstrebe

- 15: Hauptlager
- 16: Getriebe
- 17: Antriebsmotor

- 20: Steuerlenker
- 21: Kröpfung
- 22: schlitzförmige Öffnung
- 23: Anschlagdämpfer
- 24: Lager
- 25: Koppellenker
- 26: Halter
- 27: Bolzen
- 28: Lager
- 29: Lager
- 30: Antriebslenker
- 31: Lager
- 32: Hebel

- 34: auskragender Hebel, Hebel
- 35: Lenker
- 36: hinterer Lenker
- 37: Lager

## Patentansprüche

1. Lenker für ein Faltdachs (1) eines Fahrzeugs, insbesondere Kraftfahrzeugs,
- mit einem aus einer C-Säule (5) und wenigstens einem Dachseitenträger (6) und einer mit dem Dachseitenträger (6) verbundenen Dachkappe (7) bestehenden Faltdach (1),
- wobei der Dachseitenträger (6) und/oder die Dachkappe (7) über einen Antriebsienker (30) mit einem Hauptlager (15) verbunden ist.
- das Faltdach (1) mindestens einen Spriegel (8, 11) aufweist und ein Spriegel (8, 11) ein Eckspriegel (11) ist,
- wobei die Schwenkbewegung des Eckspriegels (11) mittels eines Koppellenkers (25) und eines Steuerlenkers (20) beainflusst wird,
- wobei oder Koppellenker (25) mit seinem zum Faltdach (1) weisenden Ende mit dem Eckspriegel (11) verbunden ist und mit seinem entgegen gesetzten Ende schwenkbar über ein Lager (29) am Antriebslenker (30) befestigt ist,
**dadurch gekennzeichnet,**
- **dass** der Steuerlenker (20) verschiebbar am Koppellenker (25) angebracht und mit seinem freien Ende schwenkbar am Hauptlager (15) gelagert ist,

2. Lenker für ein Faltdachs (1) nach Anspruch 1,
**dadurch gekennzeichnet,**
**dass** der Eckspriegel (11) endseitig über Lagerungen (28) mit dem Koppellenker (25) verbunden ist.

3. Lenker für ein Faltdachs (1) nach Anspruch 1 oder 2,
**dadurch gekennzeichnet,**
**dass** der Steuerlenker (20) an seinem zum Koppellenker (25) weisenden Ende eine schlitzförmige Öffnung (22) aufweist und die schlitzförmige Öffnung (22) gerade oder gekrümmt ausgeführt ist.

4. Lenker für ein Faltdach (1) nach Anspruch 1 bis 3,
**dadurch gekennzeichnet,**
**dass** der Koppellenker (25) mittels eines Halters (26) und eines Bolzens (27) in die schlitzförmige Öffnung (22) eingreifend mit dem Steuerlenker (20) verschiebbar verbunden ist

5. Lenker für ein Faltdachs (1) nach einem oder mehreren der vorangehenden Ansprüche,
**dadurch gekennzeichnet,**
**dass** der Steuerlenker (20) wenigstens eine Kröpfung (21) in Querrichtung und/oder in Längsrichtung zur Fahrzeuglangserstreckung aufweist.

6. Lenker für ein Faltdach (1) nach Anspruch 5,
**dadurch gekennzeichnet,**
**dass** der Steuerlenker (20) mit seiner Kröpfung (21) den Antriebslenker (30) teilsweise umgreift.

7. Lenker für ein Faltdach (1) nach Anspruch 3 oder nach einem den Ansprüche 4-6, soweit diese von Anspruch 3 abhängen,
**dadurch gekennzeichnet,**
**dass** der Steuerlenker (20) an wenigstens einem Ende seiner schlitzförmigen Öffnung (22) einen Anschlagdämpfer (23) aufweist und das der Anschlagdämpfer (23) aus einem Elastomer besteht.

8. Lenker für ein Faltdach (1) nach Anspruch 7,
**dadurch gekennzeichnet,**
**dass** mit dem Anschlagdämpfer (23) an einen Schalter zur Endlagenidentikation gekoppelt ist.

9. Lenker für ein Faltdach (1) nach einem oder mehreren der vorangehenden Ansprüche,
**dadurch gekennzeichnet,**
**dass** der Steuerlenkers (20) aus einem Metall oder aus einem Kunststoff hergestellt ist.

10. Fahrzeug, insbesondere Kraftfahrzeug, mit einem Lenker für ein Faltdachs (1) nach einem der Ansprüche 1 bis 9.

## Claims

1. Rod for a collapsible roof (1) of a vehicle, in particular motor vehicle,
- with a collapsible roof (1) consisting of a C pillar (5) and at least one roof side carrier (6) and a roof cap (7) connected to the roof side carrier (6),
- wherein the roof side carrier (6) and/or the roof cap (7) are/is connected to a main bearing (15) via a drive rod (30),
- the collapsible roof (1) has at least one bow (8, 11), and one bow (8, 11) is a corner bow (11),
- wherein the pivoting movement of the corner bow (11) is influenced by means of a coupling rod (25) and a control rod (20),
- wherein the coupling rod (25) is connected at its end facing the collapsible roof (1) to the corner bow (11) and at its opposite end is fastened pivotably to the drive rod (30) via a bearing (29),
**characterized**
- **in that** the control rod (20) is attached displaceably to the coupling rod (25) and is mounted at its free end pivotably on the main bearing (15).

2. Rod for a collapsible roof (1) according to Claim 1, **characterized in that** the corner bow (11) is connected on the end side to the coupling rod (25) via bearings (28).

3. Rod for a collapsible roof (1) according to Claim 1 or 2, **characterized in that** the control rod (20) has a slot-shaped opening (22) at its end facing the coupling rod (25), and the slot-shaped opening (22) is of rectilinear or curved design.

4. Rod for a collapsible roof (1) according to Claims 1 to 3, **characterized in that** the coupling rod (25) is connected displaceably to the control rod (20) in a manner engaging by means of a holder (26) and a bolt (27) in the slot-shaped opening (22).

5. Rod for a collapsible roof (1) according to one or more of the preceding claims, **characterized in that** the control rod (20) has at least one offset (21) in the transverse direction and/or in the longitudinal direction with respect to the longitudinal extent of the vehicle.

6. Rod for a collapsible roof (1) according to Claim 5, **characterized in that** the control rod (20), by means of the offset (21) thereof, partially engages around the drive rod (30).

7. Rod for a collapsible roof (1) according to Claim 3 or according to one of Claims 4-6, if the latter are dependent on Claim 3, **characterized in that** the control rod (20) has a stop damper (23) at at least one end of its slot-shaped opening (22), and **in that** the stop damper (23) is composed of an elastomer.

8. Rod for a collapsible roof (1) according to Claim 7, **characterized in that** with the stop damper (23) is coupled to a switch for final position identification.

9. Rod for a collapsible roof (1) according to one or more of the preceding claims, **characterized in that** the control rod (20) is produced from a metal or from a plastic.

10. Vehicle, in particular motor vehicle, with a rod for a collapsible roof (1) according to one of Claims 1 to 9.

## Revendications

1. Bielle pour un toit escamotable (1) d'un véhicule, notamment d'un véhicule automobile, avec un toit escamotable (1) composé d'un montant C (5) et d'au moins un support latéral de toit (6) et d'une calotte de toit (7) reliée au support latéral de toit (6) ;
le support latéral de toit (6) et/ou la calotte de toit (7) étant reliés à un palier principal (15) via une bielle d'entraînement (30) ;
le toit escamotable (1) comportant au moins un arceau (8, 11) et un arceau (8, 11) étant un arceau d'angle (11) ;
le mouvement de pivotement de l'arceau d'angle (11) étant influencé à l'aide d'une bielle de couplage (25) et d'une bielle de commande (20) ;
la bielle de couplage (25) est reliée avec son extrémité orientée vers le toit escamotable (1) à l'arceau d'angle (11) et étant fixée avec son extrémité opposée à la bielle d'entraînement (30) via un palier de roulement (29), de façon à pouvoir pivoter ;
**caractérisée en ce que** :
la bielle de commande (20) est placée de façon à pouvoir être coulissée au niveau de la bielle de couplage (25) et est disposée de façon à pouvoir pivoter au niveau du palier principal (15) au niveau de son extrémité libre.

2. Bielle pour un toit escamotable (1) selon la revendication 1, **caractérisée en ce que** l'arceau d'angle (11) est relié du côté d'extrémité à la bielle de couplage (25) via les cardans (28).

3. Bielle pour un toit escamotable (1) selon la revendication 1 ou 2, **caractérisée en ce que** la bielle de commande (20) comporte au niveau de son extrémité orientée vers la bielle de couplage (25) une ouverture (22) en forme de fente et l'ouverture (22) en forme de fente étant réalisée de façon droite ou coudée.

4. Bielle pour un toit escamotable (1) selon la revendication 1 à 3, **caractérisée en ce que** la bielle de couplage (25) est reliée de façon à pouvoir coulisser avec la bielle de commande (20) à l'aide d'un support (26) et d'un boulon (27) de façon à s'engrener dans l'ouverture (22) en forme de fente.

5. Bielle pour un toit escamotable (1) selon l'une quelconque des revendications précédentes ou plusieurs d'entre elles, **caractérisée en ce que** la bielle de commande (20) comporte au moins un coude (21) dans la direction transversale et/ou dans la direction longitudinale par rapport à l'extension longitudinale du véhicule.

6. Bielle pour un toit escamotable (1) selon la revendication 5, **caractérisée en ce que** la bielle de commande (20) enserre en partie avec son coude (21) la bielle d'entraînement (30).

7. Bielle pour un toit escamotable (1) selon la revendication 3 ou selon l'une quelconque des revendications 4 à 6 associées à la revendication 3, **caractérisée en ce que** la bielle de commande (20) comporte un amortisseur de butée (23) au niveau d'au moins une extrémité de son ouverture (22) en forme de fente et que l'amortisseur de butée (23) est en élastomère.

8. Bielle pour un toit escamotable (1) selon la revendication 7, **caractérisée en ce qu'**avec l'amortisseur de butée (23) est couplé à un contacteur pour l'identification de position d'extrémité.

9. Bielle pour un toit escamotable (1) selon l'une quelconque des revendications précédentes ou plusieurs d'entre elles, **caractérisée en ce que** la bielle de commande (20) est fabriquée en métal ou en matière plastique.

10. Véhicule, notamment véhicule automobile, avec une bielle pour un toit escamotable (1) selon l'une quelconque des revendications 1 à 9.
